(19) Europäisches Patentamt
European Patent Office
Office européen des brevets

(11) EP 1 414 096 A1

(12) **EUROPEAN PATENT APPLICATION**
published in accordance with Art. 158(3) EPC

(43) Date of publication:
**28.04.2004 Bulletin 2004/18**

(21) Application number: **02738860.2**

(22) Date of filing: **28.06.2002**

(51) Int Cl.⁷: **H01M 10/40**

(86) International application number:
**PCT/JP2002/006570**

(87) International publication number:
**WO 2003/005478 (16.01.2003 Gazette 2003/03)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **05.07.2001 JP 2001204415**
**06.07.2001 JP 2001206763**
**09.08.2001 JP 2001242051**
**25.10.2001 JP 2001327618**

(71) Applicant: **Bridgestone Corporation**
**Tokyo 104-8340 (JP)**

(72) Inventors:
- **OTSUKI, Masashi**
**Musashimurayama-shi, Tokyo 208-0001 (JP)**
- **ENDO, Shigeki**
**Tokorozawa-shi, Saitama 359-0024 (JP)**
- **OGINO, Takao**
**Tokorozawa-shi, Saitama 359-1116 (JP)**

(74) Representative: **Whalley, Kevin**
**MARKS & CLERK,**
**57-60 Lincoln's Inn Fields**
**London WC2A 3LS (GB)**

(54) **POLYMER CELL AND POLYMER ELECTROLYTE**

(57) This invention is a polymer cell comprising a positive electrode, a negative electrode and a polymer electrolyte containing a polymer, a support salt and a phosphazene derivative, and can be preferably used in various fields because the self-extinguishing property or fire retardant property, stability, low-temperature discharge property and high-temperature storing property are excellent while maintaining cell characteristics and the like required as a cell and the leakage of electrolyte is free and the thinning and miniaturization are possible.



Printed by Jouve, 75001 PARIS (FR)

## Description

### TECHNICAL FIELD

This invention relates to a polymer cell suitable for use in various fields because it is free from the leakage of an electrolyte and can be thinned and miniaturized.

### BACKGROUND ART

Heretofore, nickel-cadmium batteries were particularly the main current as a secondary cell for backing up memories in AV-information equipments such as personal computers, VTR and the like or a power source for driving them. Recently, polymer electrolyte secondary cells are considerably noticed instead of the nickel-cadmium battery because they are high in the voltage and have a high energy density and develop an excellent self-discharge characteristic, and hence various developments are attempted and a part thereof is commercialized. For example, a greater number of note-type personal computers, mobile phones and so on are driven by such a polymer electrolyte secondary cell. In the polymer electrolyte secondary cell, since carbon is frequently used as a material forming a negative electrode, various organic solvents are used as an electrolyte for the purpose of reducing a risk when lithium is formed on the surface and rendering a driving voltage into a higher level. Also, an alkali metal or the like (particularly, lithium metal or lithium alloy) is used as a negative electrode in the polymer electrolyte secondary cell for a camera, so that an aprotic organic solvent such as ester type organic solvent or the like is usually used as an electrolyte.

However, the polymer electrolyte secondary cells have the following problems as to the safety though the performance is high. Firstly, when the alkali metal (particularly lithium metal, lithium alloy or the like) is used as the negative electrode in the polymer electrolyte secondary cell, since the alkali metal is very high in the activity to water content, there is a problem that if water is penetrated into the cell due to incomplete sealing thereof or the like, risks of generating hydrogen by reacting the material of the negative electrode with water, ignition and the like become high. Also, since the lithium metal is low in the melting point (about 170°C), there is a problem that if a large current violently flows in short-circuiting or the like, there is caused a very risky state that the cell abnormally generates heat to cause the fusion of the cell or the like. Further, there is a problem that the electrolyte based on the above organic solvent is vaporized or decomposed accompanied with the heat generation of the cell to generate a gas or the explosion-ignition of the cell are caused by the generated gas.

In order to solve the above problems, there is proposed a technique that a cylindrical battery is provided with such a mechanism that when a temperature rises in the short-circuiting and overcharging of the cylindrical battery to increase a pressure inside the battery, a safety valve is actuated and at the same time a terminal of the electrode is broken to control the flowing of excess current of not less than a given quantity into the battery (Nikkan Kogyo Shinbunsha, "Electron Technology", 1997, vol. 39, No. 9). However, it is not reliable that the above mechanism is always and normally operated. If the mechanism is not normally operated, there is remained a problem that the heat generation due to the excess current becomes large to fear a risky state of ignition or the like. In order to solve this problem, therefore, it is demanded to develop polymer electrolyte secondary cells having fundamentally a high safety instead of the safety measure based on the arrangement of additional parts such as safety valve and the like as mentioned above.

As an example satisfying the above demand, there are proposed various polymer electrolytes which solve various problems based on liquid electrolytes usually used in primary cells and secondary cells such as the lowering of reliability due to the leakage toward the outside of the cell, the flashing of the electrolyte and the like.

### DISCLOSURE OF THE INVENTION

The invention is to solve the aforementioned problems of the conventional techniques and achieve the following object. That is, it is an object of the invention to provide a polymer cell having excellent self-extinguishing property or fire retardant property, stability, low-temperature discharge property and high-temperature storing property while maintaining cell characteristics required as the cell, and being free from the leakage, and enabling miniaturization and thinning and facilitating the incorporation into various equipments as well as a polymer electrolyte preferably used in such a polymer cell.

Means for solving the above problem are as follows.

1. A polymer cell comprising a positive electrode, a negative electrode, and a polymer electrolyte containing a polymer, a support salt and a phosphazene derivative.
2. A polymer cell according to the item 1, wherein the phosphazene derivative is represented by any one of the following general formulae (1) and (2):

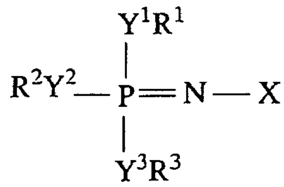

····· Formula (1)

(wherein each of $R^1$, $R^2$ and $R^3$ is a monovalent substituent or a halogen atom, X is a group containing at least one element selected from the group consisting of carbon, silicon, germanium, tin, nitrogen, phosphorus, arsenic, antimony, bismuth, oxygen, sulfur, selenium, tellurium and polonium, and each of $Y^1$, $Y^2$ and $Y^3$ is a bivalent connecting group, a bivalent element or a single bond);

$$(PNR^4{}_2)_n \qquad \text{Formula (2)}$$

(wherein $R^4$ is a monovalent substituent or a halogen atom and n is 3-14).

3. A polymer cell according to the item 1 or 2, wherein the phosphazene derivative has a group containing a multiple bond other than phosphorus atom-nitrogen atom multiple bond in its molecular structure.

4. A polymer cell according to the item 3, wherein the multiple bond other than phosphorus atom-nitrogen atom multiple bond is carbon atom-carbon atom multiple bond.

5. A polymer cell according to the item 3 or 4, wherein the multiple bond other than phosphorus atom-nitrogen atom multiple bond is a double bond.

6. A polymer cell according to the item 3, wherein the multiple bond other than phosphorus atom-nitrogen atom multiple bond is an allyl group or a vinyl group.

7. A polymer cell according to the item 1, wherein the negative electrode has a surface roughness (Ra) of not more than 0.6 mm.

8. A polymer cell according to the item 1, wherein the polymer is at least one of polyethylene oxide, polyacrylate and polypropylene oxide.

9. A polymer cell according to the item 1 or 8, wherein the polymer has a weight-average molecular weight of not less than 100,000.

10. A polymer cell according to the item 9, wherein the weight-average molecular weight of the polymer is not less than 5,000,000.

11. A polymer cell according to the item 1, wherein an amount of the polymer to a total amount of the polymer and the support salt in the polymer electrolyte is 80-95% by mass.

12. A polymer cell according to the item 1, wherein a content of the phosphazene derivative in the polymer electrolyte is at least 0.5% by mass.

13. A polymer cell according to the item 12, wherein a content of the phosphazene derivative in the polymer electrolyte is at least 2% by mass.

14. A polymer cell according to the item 13, wherein a content of the phosphazene derivative in the polymer electrolyte is at least 2.5% by mass.

15. A polymer cell according to the item 14, wherein a content of the phosphazene derivative in the polymer electrolyte is at least 3% by mass.

16. A polymer electrolyte characterized by containing a polymer, a support salt and a phosphazene derivative and using in a polymer cell.

## BEST MODE FOR CARRYING OUT THE INVENTION

The invention will be described below.

The polymer cell according to the invention comprises a positive electrode, a negative electrode and a polymer electrolyte and contains the other members, if necessary.

[Positive electrode]

The material for the positive electrode is not particularly limited and can be used by properly selecting from well-known materials for the positive electrode. For example, there are preferably mentioned metal oxides such as

$V_2O_5$, $V_6O_{13}$, $MnO_2$, $MoO_3$, $LiCoO_2$, $LiNiO_2$, $LiMn_2O_4$ and the like; metal sulfides such as $TiS_2$, $MoS_2$ and the like; conductive polymers such as polyaniline and the like. Among them, $LiCoO_2$, $LiNiO_2$ and $LiMn_2O_4$ are particularly preferable because they are high in the capacity and safety and excellent in the wettability to the electrolyte. These materials may be used alone or in a combination of two or more.

The shape of the positive electrode is not particularly limited and can be properly selected from well-known shapes as an electrode in the polymer cell. For example, there are mentioned a sheet, a column, a plate, a spiral and the like. Among them, the sheet or the like is preferable in view of the thinning of the cell.

[Negative electrode]

The negative electrode is made possible to occlude and release, for example, lithium, lithium ion or the like. The negative electrode is not particularly limited unless it can occlude and release lithium or lithium ion, and can be used by properly selecting from well-known materials for negative electrode. For instance, there are mentioned lithium containing materials such as lithium metal itself; an alloy of lithium with aluminum, indium, lead, zinc or the like; carbon material such as graphite doped with lithium, and so on. Among them, the carbon material such as graphite or the like is preferable in view of a higher safety. These materials may be used alone or in a combination of two or more. The shape of the negative electrode is not particularly limited and can be properly selected from well-known shapes likewise the shape of the positive electrode. A surface form of the negative electrode is preferable to be smooth in order to further effectively suppress the precipitation of dendrite. Concretely, the surface roughness (Ra) is preferable to be not more than 0.6 mm.

[Polymer electrolyte]

The polymer electrolyte comprises a polymer, a support salt and a phosphazene derivative, and contains the other components, if necessary.

- Polymer-

The polymer is not particularly limited, and all polymers usually used in the polymer cell are preferably used. For example, there are mentioned polyethylene oxide, polyacrylate, polypropylene oxide, polyacrylonitrile, polyacrylate containing ethylene oxide unit and so on. Among them, polyethylene oxide and polypropylene oxide are particularly preferable because they are electrically stable.

The polymer is preferable to have a weight-average molecular weight of not less than 100,000, more preferably not less than 5,000,000. When the weight-average molecular weight is less than 100,000, the strength is weak and a state close to sol may be formed rather than gel state.

-Support salt-

As the support salt, it is preferable to be a support salt as an ion source for the lithium ion or the like. The ion source for the lithium ion is not particularly limited and includes, for example, lithium salts such as $LiClO_4$, $LiBF_4$, $LiPF_6$, $LiCF_3SO_3$, $LiAsF_6$, $LiC_4F_9SO_3$, $Li(CF_3SO_2)_2N$, $Li(C_2F_5SO_2)_2N$ and the like. They may be used alone or in a combination of two or more.

In the polymer electrolyte, an amount of the polymer to a total amount of the polymer and the support salt is preferable to be 80-95% by mass, particularly about 90% by mass. When the amount of the polymer is less than 80% by mass, the electric conductivity is improved, but the strength is weak, while when it exceeds 95% by mass, the electric conductivity lowers.

-Phosphazene derivative-

The reason why the polymer electrolyte contains the phosphazene derivative is as follows. Heretofore, in the secondary cell containing the lithium metal or the like as an active substance for the negative electrode, there is a problem that lithium dissolved in the electrolyte as an ion during the discharge is partly precipitated as a dendrite (dendrite crystal) in the recharge to bring about internal short-circuiting, explosion and the like. On the other hand, by using the electrolyte containing the phosphazene derivative is effectively suppressed the precipitation of dendrite and there is no risk such as the internal short-circuiting-explosion of the battery and the like and there is provided a safe and long-life secondary battery.

As an electrolyte in the conventional secondary cell or the like is used a polymer electrolytes based on the aprotic organic solvent. In such a polymer electrolyte, however, the risk is high because when a large current is violently

flown in the short-circuiting or the like to abnormally generate heat in the cell, vaporization-decomposition are caused to generate gas, or the explosion-ignition of the cell are caused by the generated gas and heat.

On the other hand, when the phosphazene derivative is included in the electrolyte of the cell, it is possible to reduce the above risk because the electrolyte can develop an excellent self-extinguishing property or fire retardant property under an action of nitrogen gas, halogen gas and the like derived from the phosphazene derivative. Also, phosphorus has an action of suppressing a chain decomposition of a high polymer material constituting the cell, which can effectively provide the self-extinguishing property or fire retardant property.

In the conventional secondary battery, it is considered that in the ester based electrolyte or the like used as an electrolyte, the lithium ion source or the like such as $LiPF_6$ or the like as a support salt is decomposed into LiF and $PF_5$ with the lapse of time and the corrosion is progressed by the resulting $PF_5$ gas, a hydrogen fluoride gas produced by further reacting the $PF_5$ gas with water or the like. That is, the electric conductivity of the electrolyte lowers but also there is caused a phenomenon that the electrode material is deteriorated by the generated hydrogen fluoride gas. On the contrary, the phosphazene derivative suppresses the decomposition of the lithium ion source such as $LiPF_6$ or the like and contributes to the stabilization. Therefore, it is possible to suppress the decomposition reaction of the electrolyte to control the corrosion and deterioration by including the phosphazene derivative to the electrolyte.

<Content of phosphazene derivative>

As a content of the phosphazene derivative in the polymer electrolyte, there are four kinds of the contents, i.e. first content "capable of preferably suppressing the precipitation of dendrite", a second content capable of preferably giving "self-extinguishing property" to the polymer electrolyte, a third content capable of preferably "fire retardant property" to the polymer electrolyte and a fourth content capable of preferably giving "deterioration resistance" to the polymer electrolyte in accordance with the effects obtained by the inclusion of the phosphazene derivative.

From a viewpoint of "capability of preferably suppressing the precipitation of dendrite", the first content of the phosphazene derivative in the polymer electrolyte is preferably not less than 0.5% by mass.

From a viewpoint of "self-extinguishing property", the second content of the phosphazene derivative in the polymer electrolyte is preferably not less than 2.5% by mass. Moreover, the term "self-extinguishing property" used in the invention means a property that the ignited flame extinguishes at a line of 25-100 mm and the ignition is not observed in a falling object according to the following evaluation method.

From a viewpoint of "fire retardant property", the third content of the phosphazene derivative in the polymer electrolyte is preferably not less than 3% by mass. In the invention, the term "fire retardant property" means a property that the ignited flame does not arrive at a line of 25 mm and the ignition is not observed in the falling object according to the following evaluation method.

In the invention, a property that no ignition is caused even by adding a test flame according to the following evaluation method, i.e. a property that a test flame does not ignite a test piece (combustion length: 0 mm) is "non-combustibility".

<<Evaluation method of self-extinguishing property, fire retardant property and non-combustibility>>

The self-extinguishing property, fire retardant property and non-combustibility are evaluated by measuring a combustion behavior of a flame ignited under an atmospheric environment according to a method arranging UL94HB method of UL (Underwriting Laboratory) standard. In this case, the ignitability, combustion property, carbide formation and phenomenon in secondary ignition are also observed. Concretely, the test is carried out by using a polymer electrolyte impregnating and expanding the phosphazene derivative used in the invention (a test piece of 127 mm $\times$ 12.7 mm) based on UL test standard.

From a viewpoint of "deterioration resistance", the fourth content of the phosphazene derivative in the polymer electrolyte is preferably not less than 2% by mass. Moreover, in the invention, the term "deterioration" means a decomposition of the support salt (e.g. lithium salt), and the effect of preventing the deterioration is evaluated by the following "evaluation method of stability".

<<Evaluation method of stability>>

(1) At first, a moisture content is measured after the preparation of the polymer electrolyte. Then, a concentration of hydrogen fluoride in the polymer electrolyte is measured by a high-speed liquid chromatography (ion chromatography). Further, a color tone of the polymer electrolyte is visually observed and thereafter a discharge-recharge capacity is calculated by a discharge-recharge test.

(2) After the polymer electrolyte is left to stand in a globe box for 2 months, the moisture content and concentration of hydrogen fluoride are again measured and the color tone is observed and the discharge-recharge capacity is calculated, and then the stability is evaluated by the change of the thus obtained numerical values.

<Flash point of phosphazene derivative>

The flash point of the phosphazene derivative is not particularly limited, but it is preferably not lower than 100°C, more preferably not lower than 150°C, further preferably not lower than 230°C, most preferably no flash in view of the control of ignition-combustion or the like. When the phosphazene derivative has a flash point of not lower than 100°C, the ignition or the like is suppressed and also even if the ignition or the like is caused in the interior of the cell, it is possible to lower the risk of catching fire and spreading over the surface of the electrolyte.

Moreover, the flash point concretely means a temperature that the flame spreads on the surface of the substance to cover at least 75% of the substance surface. The flash point is a measure for judging a tendency of forming a combustible mixture with air. In the invention, a value measured by the following miniflash method is used. That is, there is provided an apparatus of a closed cup system provided with a small measuring chamber of 4 ml, a heating cup, a flame, an ignition portion and an automatic flame detecting system (automatic ignition measuring apparatus) (MINIFLASH, made by GRABNR INSTRUMENTS), and then 1 ml of a sample to be measured is put into the heating cup and a cover is placed on the cup and thereafter the heating of the heating cup is started from a position above the cover. As a temperature of the sample is raised at a constant interval, a mixture of steam and air inside the cup is ignited at a constant temperature interval to detect flashing. A temperature when the flashing is detected is recognized as a flash point.

<Concrete molecular structure of phosphazene derivative>

The phosphazene derivative is preferable to have a substituent containing a halogen atom in its molecular structure. When the substituent containing the halogen atom is existent in the molecular structure, it is possible to more effectively develop the self-extinguishing property or fire retardant property in the electrolyte by a halogen gas derived from the phosphazene derivative. Also, the occurrence of halogen radical comes into problem in the compound having the substituent containing a halogen atom, but the phosphazene derivative does not cause such a problem because a phosphorus element in the molecular structure catches the halogen radical to form a stable phosphorus halide.

The content of the halogen atom in the phosphazene derivative is preferably 2-80% by mass, more preferably 2-60% by mass, further preferably 2-50% by mass. When the content is less than 2% by mass, the effect by the inclusion of the halogen atom may not sufficiently appear, while when it exceeds 80% by mass, the electric conductivity may lower. As the halogen atom, fluorine, chlorine, bromine and the like are preferable, and fluorine is particularly preferable.

The phosphazene derivative is not particularly limited unless it is liquid at room temperature (25°C), but chain phosphazene derivatives represented by the general formula (1) and cyclic phosphazene derivatives represented by the general formula (2) are preferable because they are excellent in the effect of suppressing the precipitation of dendrite and in the self-extinguishing property or fire retardant property:

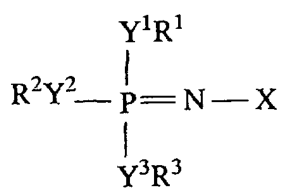

····· Formula (1)

(wherein each of $R^1$, $R^2$ and $R^3$ is a monovalent substituent or a halogen atom, X is a group containing at least one element selected from the group consisting of carbon, silicon, germanium, tin, nitrogen, phosphorus, arsenic, antimony, bismuth, oxygen, sulfur, selenium, tellurium and polonium, and each of $Y^1$, $Y^2$ and $Y^3$ is a bivalent connecting group, a bivalent element or a single bond);

$$(PNR^4{}_2)_n \qquad \text{Formula (2)}$$

(wherein $R^4$ is a monovalent substituent or a halogen atom and n is 3-14).

In the formula (1), each of $R^1$, $R^2$ and $R^3$ is not particularly limited unless it is the monovalent substituent or

the halogen atom. As the monovalent substituent are mentioned an alkoxy group, a phenoxy group, an alkyl group, a carboxyl group, an acyl group, an aryl group and so on. As the halogen atom are preferably mentioned, for example, the aforementioned halogen atoms. Among them, the alkoxy group is particularly preferable in a point that the viscosity of the following aprotic organic solvent to be impregnated in the polymer can be lowered. $R^1$ to $R^3$ may be the same kind of the substituent, or some of them may be different kinds of the substituents.

As the alkoxy group are mentioned, for example, methoxy group, ethoxy group, propoxy group, butoxy group, and alkoxy-substituted alkoxy groups such as methoxyethoxy group, methoxyethoxyethoxy group and the like, and so on. Among them, methoxy group, ethoxy group, methoxyethoxy group or methoxyethoxyethoxy group is preferable as all of $R^1$ to $R^3$, and methoxy group or ethoxy group is particularly preferable from a viewpoint of low viscosity and high dielectric constant.

As the alkyl group are mentioned methyl group, ethyl group, propyl group, butyl group, pentyl group and so on.

As the acyl group are mentioned formyl group, acetyl group, propionyl group, butylyl group, isobutylyl group, valelyl group and so on.

As the aryl group are mentioned phenyl group, tolyl group, naphthyl group and so on.

In these substituents, a hydrogen atom is preferable to be substituted with a halogen atom.

In the formula (1), as the group shown in $Y^1$, $Y^2$ and $Y^3$, there are mentioned $CH_2$ group and a group containing an element of oxygen, sulfur, selenium, nitrogen, boron, aluminum, scandium, gallium, yttrium, indium, lanthanum, thallium, carbon, silicon, titanium, tin, germanium, zirconium, lead, phosphorus, vanadium, arsenic, niobium, antimony, tantalum, bismuth, chromium, molybdenum, tellurium, polonium, tungsten, iron, cobalt, nickel or the like. Among them, $CH_2$ group, groups containing oxygen, sulfur, selenium or nitrogen and so on are preferable. Particularly, a case that $Y^1$, $Y^2$ and $Y^3$ contain sulfur or selenium is preferable because the self-extinguishing property or fire retardant property of the electrolyte is considerably improved. All of $Y^1$ to $Y^3$ are the same kind, or some of them may be different kinds.

In the formula (1), X is preferable to be a group containing at least one element selected from the group consisting of carbon, silicon, nitrogen, phosphorus, oxygen and sulfur from a viewpoint of the consideration on hazardous property, environment and the like. A group having a structure represented by the following general formula (3) is more preferable:

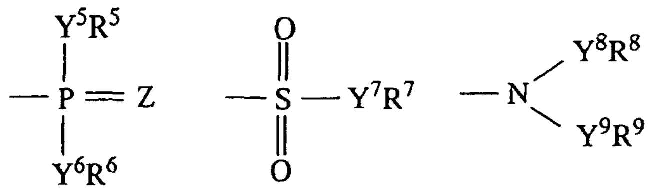

····· Formula (3)

Group (A) Group (B) Group (C)

In the formula (3), each of $R^5$ to $R^9$ is a monovalent substituent or a halogen atom, and each of $Y^5$ to $Y^9$ is a bivalent connecting group, a bivalent element or a single bond, and Z is a bivalent group or a bivalent element.

As $R^5$ to $R^9$ in the formula (3) are preferably mentioned the same monovalent substituents or halogen atoms as mentioned in $R^1$ to $R^3$ of the formula (1). Also, they may be the same kind of some different kinds in the same group. $R^5$ and $R^6$ as well as $R^8$ and $R^9$ may be bonded to each other to form a ring.

As the groups of $Y^5$ to $Y^9$ in the formula (3) are mentioned the same bivalent substituents or bivalent groups as mentioned in $Y^1$ to $Y^3$ of the formula (1). Similarly, the group containing sulfur or selenium is particularly preferable because the self-extinguishing property or fire retardant property of the electrolyte is considerably improved. They may be the same kind or some different kinds in the same group.

As Z in the formula (3) are mentioned, for example, $CH_2$ group, CHR group (R is al alkyl group, an alkoxy group, a phenyl group or the like, and so forth.), NR group, a group containing an element of oxygen, sulfur, selenium, boron, aluminum, scandium, gallium, yttrium, indium, lanthanum, thallium, carbon, silicon, titanium, tin, germanium, zirconium, lead, phosphorus, vanadium, arsenic, niobium, antimony, tantalum, bismuth, chromium, molybdenum, tellurium, polonium, tungsten, iron, cobalt, nickel or the like, and so on. Among them, $CH_2$ group, CHR group, NR group and group containing an element of oxygen, sulfur or selenium are preferable. Particularly, the group containing sulfur or selenium is particularly preferable because the fire retardant property of the electrolyte is considerably improved.

As the group in the formula (3), the group containing phosphorus as shown by Group (A) is particularly preferable in view that the self-extinguishing property or fire retardant property can be effectively and preferably given. Also, the group containing sulfur as shown by Group (B) is especially preferable in a point that the interfacial resistance of the electrolyte is made small.

In the formula (2), $R^4$ is not particularly limited unless it is a monovalent substituent or a halogen atom. As the monovalent substituent are mentioned an alkoxy group, a phenoxy group, an alkyl group, a carboxyl group, an acyl group, an aryl group and so on. As the halogen atom are preferably mentioned the aforementioned halogen atoms. Among them, the alkoxy group, phenoxy group and the like are particularly preferable in view that the viscosity of the electrolyte can be reduced. As the alkoxy group are mentioned, for example, methoxy group, ethoxy group, methoxyethoxy group, propoxy group and so on. Among them, methoxy group, ethoxy group and methoxyethoxy group are particularly preferable. In these substituents, a hydrogen atom is preferable to be substituted with a halogen atom.

As the phosphazene derivative represented by the formula (2), it is preferable that $R^4$ is at least one of alkoxy group, phenoxyl group and fluorine and at least one of all $R^4$s is fluorine and at least another one thereof is alkoxy group or phenoxy group in view that the precipitation of dendrite can effectively be suppressed.

By properly selecting $R^1$ to $R^9$, $Y^1$ to $Y^3$, $Y^5$ to $Y^9$ and Z in the formulae (1) to (3) can be obtained polymer electrolytes impregnated with an electrolyte having a more preferable viscosity and a mixable solubility and the like. These phosphazene derivatives may be used alone of in a combination of two or more.

The phosphazene derivative is preferable to have a group containing a multiple bond other than phosphorus atom-nitrogen atom multiple bond in its molecular structure from a viewpoint of stabilizing the electrode by impregnating in the polymer electrolyte. When the phosphazene derivative having the multiple bond other than phosphorus atom-nitrogen atom multiple bond in its molecular structure is used in a polymer cell, a stable film having a high ion conductivity is formed on the surface of the electrode in the recharge of the cell or the like and the reaction between the electrode and the electrolyte (i.e. decomposition reaction of the electrolyte) accompanied with the discharge-recharge of the cell or the like is suppressed and hence it is possible to preferably provide the polymer cell being excellent in the cycle characteristics and the cell stability and stable over a long time of period.

As the multiple bond other than phosphorus atom-nitrogen atom multiple bond are mentioned, for example, carbon atom-carbon atom multiple bond, carbon atom-oxygen atom multiple bond, carbon atom-nitrogen atom multiple bond and so on. Among them, the carbon atom-carbon atom multiple bond, carbon atom-nitrogen atom multiple bond and the like are particularly preferable in a point that there can be preferably provided polymer cells being more excellent in the cycle characteristics and excellent in the cell stability and stable over a long time of period.

As a form of the multiple bond other than phosphorus atom-nitrogen atom multiple bond are mentioned double bond, triple bond and the like. In case of the carbon atom-carbon atom multiple bond, the double bond is particularly preferable in a point that there can be preferably provided polymer cells being further excellent in the cycle characteristics and excellent in the cell stability and stable over a long time of period.

As a concrete example of the group containing the multiple bond other than phosphorus atom-nitrogen atom multiple bond are mentioned, for example, allyl group, vinyl group, carboxyl group, acyl group (formyl group, acetyl group, propionyl group, butylyl group, isobutylyl group, valelyl group or the like) and so on. These groups may have another substituent (e.g. alkyl group, halogen atom or the like) or a connecting group (e.g. oxygen, nitrogen, phosphorus, carbon or the like), or these substituents or connecting groups may be bonded to each other to form a ring.

From a viewpoint of the stabilization of the electrode, the content of the phosphazene derivative with a group containing a multiple bond other than phosphorus atom-nitrogen atom multiple bond in its molecular structure in the polymer electrolyte is preferably not less than 0.3% by mass, more preferably 0.5-5% by mass. When the content of the phosphazene derivative with a group containing a multiple bond other than phosphorus atom-nitrogen atom multiple bond in its molecular structure in the polymer electrolyte is not less than 0.3% by mass, a stable film having a high ion conductivity is formed on the surface of the electrode in the recharge of the polymer cell or the like and the reaction between the electrode and the electrolyte (i.e. decomposition reaction of the electrolyte) accompanied with the discharge-recharge of the polymer cell or the like is suppressed and hence it is possible to preferably provide the polymer cell being excellent in the cycle characteristics and the cell stability and stable over a long time of period.

The phosphazene derivative with a group containing a multiple bond other than phosphorus atom-nitrogen atom multiple bond in its molecular structure is not particularly limited unless it is liquid at room temperature (25°C). In a point that there can be preferably provided polymer cells being excellent in the cycle characteristics and excellent in the cell stability and stable over a long time of period and the self-extinguishing property or fire retardant property is excellent, chain phosphazene derivative in which at least one of $R^1$ to $R^3$ and X in the formula (1) is "a group containing a multiple bond other than phosphorus atom-nitrogen atom multiple bond", cyclic phosphazene derivative in which at least one of $R^4$s in the same molecule of the formula (2) is "a group containing a multiple bond other than phosphorus atom-nitrogen atom multiple bond" and the like are preferable.

As the phosphazene derivative represented by the formula (2) and having a group containing a multiple bond other than phosphorus atom-nitrogen atom multiple bond in its molecular structure, it is preferable that $R^4$ is at least one of alkoxy group, phenoxy group and fluorine, and at least one of $R^4$s is fluorine and at least another one thereof is alkoxy group or phenoxy group in a point that there can be preferably provided polymer cells being excellent in the cycle characteristics and excellent in the cell stability and stable over a long time of period and the self-extinguishing property or fire retardant property is excellent.

As the production method of the phosphazene derivative having the group containing a multiple bond other than phosphorus atom-nitrogen atom multiple bond in its molecular structure, there are mentioned a method wherein $(PNCl_2)_n$ (cyclic Cl body) is used as a starting material and fluorinated with a fluorinating agent (e.g. NaF or the like) in a solvent such as acetonitrile or the like under a temperature condition of 80°C for 5 hours and distilled to obtain $(PNF_2)_n$ (cyclic F body), and then the resulting $(PNF_2)_n$ (cyclic F body) is reacted with an alcohol (allyl alcohol, vinyl alcohol or the like) in the presence of potassium carbonate in a solvent such as hexane or the like and distilled under a reduced pressure, and so on.

-Other components-

As the other component included in the polymer electrolyte, an aprotic organic solvent is particularly preferable. It is preferable to include the aprotic organic solvent in the electrolyte in view of the safety. That is, when the aprotic organic solvent is included in the electrolyte, the high safety can be obtained without reacting with the material for the negative electrode or the like. Also, an optimum ion conductivity as a polymer cell can be easily attained.

The aprotic organic solvent is not particularly limited, but includes ether compounds, ester compounds and the like. Concretely, there are mentioned 1,2-dimethoxy ethane, tetrahydrofuran, dimethyl carbonate, diethyl carbonate, diphenyl carbonate, ethylene carbonate, propylene carbonate, γ-butyrolactone, γ-valerolactone, methylethyl carbonate, ethylmethyl carbonate and so on. Among them, cyclic ester compounds such as ethylene carbonate, propylene carbonate, γ-butyrolactone and the like; chain ester compounds such as dimethyl carbonate, ethylmethyl carbonate, diethyl carbonate and the like; and chain ether compounds such as 1,2-dimethoxy ethane and the like are preferable. Particularly, the cyclic ester compound is preferable in view that the dielectric constant is high and the solubility of lithium salt or the like is excellent, and the chain ester compound and ether compound are preferable in view that the viscosity of the non-aqueous electrolyte comprising the phosphazene derivative and aprotic organic solvent to be impregnated in the polymer is lowered because they are low in the viscosity. They may be used alone or in a combination of two or more, but the combination of two or more is preferable. The viscosity at 25°C of the aprotic organic solvent is not particularly limited, but it is preferably not more than 10 mPa·s (10 cP), more preferably not more than 5 mPa·s (5 cP).

-Preparation and form of polymer electrolyte-

The production method of the polymer electrolyte is not particularly limited, but includes a method wherein the polymer and support salt are mixed at a mass ratio (polymer/support salt) of 9/1 and uniformly mixed by adding a volatile solvent and uniformly dissolved at about 80°C and heated at about 40°C under vacuum to evaporate the volatile solvent and dried and impregnated with an electrolyte containing the phosphazene derivative and swelled to obtain a polymer electrolyte, and the like. As the volatile solvent are mentioned acetonitrile, alcohol and so on. Acetonitrile or the like is preferable in view of an excellent solubility and the like. A form of the polymer electrolyte is not particularly limited, but a sheet or the like is preferable in view of the thinning of the cell or the like.

[Other members]

As the other member are preferably mentioned well-known members usually used in the polymer cell.

A conformation of the polymer cell according to the invention is not particularly limited, but preferably includes various well-known forms such as cylindrical cells of coin type, button type, paper type, rectangle or spiral structure and the like. In case of the spiral structure, a polymer cell can be manufactured, for example, by preparing a sheet-shaped positive electrode, sandwiching a collector between the positive electrodes, piling negative electrodes (sheet-shaped) thereon and then spirally winding them or the like.

The aforementioned polymer cells according to the invention are excellent in the self-extinguishing property or fire retardant property while maintaining cell characteristics required as the cell and the like, excellent in the low-temperature discharge property and high-temperature storing property, and free from the leakage of the electrolyte, and enable the miniaturization and thinning, and are easy in the incorporation into various equipments, so that they are preferably utilized in various fields including mobile phones, electric cars and the like. Particularly, they are useful as a cell having a high discharge capacity even under severer temperature condition, and are very useful as a cell for various automobiles requiring cell performances after the storing in a high-temperature environment over a long time.

In the invention, the "low-temperature discharge property" is concretely evaluated by measuring a reducing ratio of discharge capacity as follows.

<Low-temperature discharge property>

After the discharge-recharge cycling is repeated 50 cycles under conditions of upper limit voltage: 4.5 V, lower

limit voltage: 3.0 V, discharge current: 100 mA and recharge current: 50 mA, a discharge capacity (25°C) is measured.

Thereafter, the discharge-recharge cycling is repeated 50 cycles except that the temperature in the discharge is changed to -30°C, and then a discharge capacity (-30°C) is measured.

The discharge capacity at this temperature (-30°C) is compared with the discharge capacity (25°C) to calculate a reducing ratio of discharge capacity according to the following equation as an evaluation of the low-temperature discharge property.

Equation: Reducing ratio of discharge capacity = (discharge capacity (-30°C)/

discharge capacity (25°C)) × 100 (%)

Further, in the invention, the "high-temperature storing property" is concretely evaluated as follows.

<High-temperature storing property: measurement and evaluation of discharge property at room temperature after a high-temperature test (after the storing)>

After the cell is stored at 80°C for 10 days, the discharge property (discharge capacity (mAh/g), average discharge voltage (V) and the like) is measured and evaluated at room temperature (25°C). Also, an internal resistance value (Ω, 25°C, 1 kHz impedance) is measured and evaluated at 50% discharge depth (state of discharging 50% of full capacity) in the measurement and evaluation of the discharge property.

[Polymer electrolyte]

The polymer electrolyte according to the invention comprises a polymer, a support salt and a phosphazene derivative and is used in a polymer cell. The polymer, support salt and phosphazene derivative are the same as described in "Polymer cell" of the invention. The polymer cell is not particularly limited, but polymer cells having the conventionally known construction are preferably mentioned.

By using the aforementioned polymer electrolyte according to the invention in the polymer cell can be provided polymer cells having excellent self-extinguishing property or fire retardant property, stability, low-temperature discharge property and high-temperature storing property while maintaining cell characteristics and the like required as a cell, and being free from the leakage of the electrolyte, and enabling the miniaturization and thinning and facilitating the incorporation into various equipments.

The invention will be concretely described with reference to examples and comparative examples, but the invention is not limited to the following examples.

(Example 1)

[Preparation of non-aqueous electrolyte]

To 47.5 ml of a mixed solvent of diethyl carbonate and ethylene carbonate (mixing ratio (volume ratio): diethyl carbonate/ethylene carbonate = 1/1)(aprotic organic solvent) is added 2.5 ml (5% by volume) of a phosphazene derivative A (cyclic EO/F type phosphazene derivative (ratio (EO/F) of ethoxy group (EO) to fluorine (F) in all $R^4$s at n=3 in the formula (2) = 2/4), viscosity: 1.3 mPa·s (1.3 cP)) to prepare a non-aqueous electrolyte.

[Preparation of polymer electrolyte]

3.6 g of polyethylene oxide (Mw = 5,000,000 to 6,000,000) and 0.4 g of a support salt ($LiPF_6$) are mixed at a mass ratio (polyethylene oxide/$LiPF_6$) of 9/1 and added with 10 mL of a volatile solvent (acetonitrile) and uniformly mixed and uniformly dissolved and heated at 40°C under vacuum to evaporate the volatile solvent (acetonitrile) and dried. Thereafter, 1 mL of the above non-aqueous electrolyte is impregnated and swelled to obtain a gel-like polymer electrolyte.

<Evaluation of non-combustibility>

A case that no ignition is caused by adding a test flame or a test piece is not ignited by the test flame (combustion length: 0 mm) is evaluated as non-combustibility.

<Evaluation of fire retardant property>

A case that the ignited flame does not arrive at a line of 25 mm and the ignition is not observed in the falling object is evaluated as fire retardant property.

<Evaluation of self-extinguishing property>

A case that the ignited flame extinguishes at a line of 25-100 mm and the ignition is not observed in a falling object is evaluated as self-extinguishing property.

<Evaluation of combustion property>

A case that the ignited flame exceeds a line of 100 mm is evaluated as combustion property.

[Preparation of polymer cell]

A polymer cell is prepared by using the above polymer electrolyte as follows. To 100 parts by mass of $LiCoO_2$ (made by Nippon Kagaku Kogyo Co., Ltd.) are added 10 parts by mass of acetylene black and 10 parts by mass of polytetrafluoroethylene (PTFE) and milled with an organic solvent (mixed solvent of 50/50 volume% of ethyl acetate and ethanol) and rolled into a thin-layer positive electrode sheet having a thickness of 100 μm and a width of 40 mm. Also, a graphite sheet having a thickness of 150 μm is used as a negative electrode.

Then, polyethylene oxide sol dissolved in the acetonitrile solvent (containing polyethylene oxide and $LiPF_6$) is applied to both surfaces of a polyethylene separator at a thickness of 150 μm with a doctor blade and thereafter the acetonitrile solvent is evaporated to prepare a polyethylene oxide-lithium gel electrolyte (dry gel). This electrolyte is sandwiched between the positive electrode and the negative electrode, which is wound up and the mixed solvent of diethyl carbonate and ethylene carbonate (mixing ratio (volume ratio): diethyl carbonate/ethylene carbonate = 1/1) (aprotic organic solvent) containing 5% by volume of the phosphazene derivative A prepared in the above "Preparation of non-aqueous electrolyte" is impregnated to prepare a size AA polymer cell. A length of the positive electrode in this cell is about 260 mm.

<Measurement and evaluation of cell characteristics and the like>

With respect to the thus obtained cell, initial cell characteristics (voltage, internal resistance) at 25°C are measured and evaluated, and then the discharge-recharge cycling property is measured and evaluated by the following evaluation method. These results are shown in Table 1.

-Evaluation of discharge-recharge cycling property-

After the obtained cell is recharged at room temperature (25°C), it is discharged at a low temperature (-30°C), and a discharge capacity at this low temperature is compared with a discharge capacity in the cell recharged and discharged at 25°C to calculate a reducing ratio of discharge capacity according to the following equation. The same measurement and evaluation as mentioned above are repeated with respect to three cells and an average value is calculated as an evaluation of the discharge-recharge cycling property. The result is shown in Table 1.

Equation: reducing ratio of discharge capacity = 100 - (discharge capacity at low temperature/discharge capacity (25°C)) x 100 (%)

<Evaluation of high-temperature storing property: measurement and evaluation of discharge property at room temperature after high-temperature test>

After the obtained cell is stored at 80°C for 10 days, the discharge property (discharge capacity (mAh/g), average discharge voltage (V) and the like) are measured and evaluated at room temperature (25°C). The result is shown in Table 1. Also, the internal resistance value (25°C, 1 kHz impedance) is measured and evaluated at a 50% discharge depth (state of discharging 50% of full capacity) in the measurement and evaluation of the discharge property to be 34.6 Ω.

<Evaluation on effect of suppressing dendrite precipitation>

After the discharge-recharge cycling of 1C is repeated at 25°C 30 times, the cell is decomposed to visually observe inner surfaces of the positive electrode and negative electrode and hence the precipitation of lithium is not observed without change.

(Comparative Example 1)

The preparation of a non-aqueous electrolyte, preparation of a polymer electrolyte and preparation of a polymer cell are conducted in the same manner as in Example 1 except that the amount of the mixed solvent of diethyl carbonate and ethylene carbonate (mixing ratio (volume ratio): diethyl carbonate/ethylene carbonate = 1/1)(aprotic organic solvent) in the "Preparation of non-aqueous electrolyte" of Example 1 is changed to 50 ml and the phosphazene derivative A is not added, and then the self-extinguishing property, fire retardant property and non-combustibility, initial cell characteristics (voltage, internal resistance), discharge-recharge cycling property, low-temperature discharge property and high-temperature storing property are measured and evaluated, respectively. The results are shown in Table 1. Moreover, the internal resistance value (25°C, 1 kHz impedance) is measured and evaluated at a 50% discharge depth (state of discharging 50% of full capacity) in the measurement and evaluation of the discharge property to be 89.5 Ω.

Further, as the effect of suppressing dendrite precipitation is evaluated in the same manner as in Example 1, the growth of lithium crystal (dendrite) is confirmed on the surface of the negative electrode. Also, fine unevenness due to the precipitation of granular lithium is observed on the surface of the positive electrode.

(Example 2)

The preparation of a non-aqueous electrolyte, preparation of a polymer electrolyte and preparation of a polymer cell are conducted in the same manner as in Example 1 except that a phosphazene derivative B (cyclic EO/F type phosphazene derivative (ratio (EO/F) of ethoxy group (EO) to fluorine (F) in all $R^4$s at n=3 in the formula (2) = 1/5), viscosity: 1.1 mPa·s (1.1 cP)) is added instead of the phosphazene derivative A, and then the self-extinguishing property, fire retardant property and non-combustibility, initial cell characteristics (voltage, internal resistance), discharge-recharge cycling property, low-temperature discharge property and high-temperature storing property are measured and evaluated, respectively. The results are shown in Table 1. Moreover, the internal resistance value (25°C, 1 kHz impedance) is measured and evaluated at a 50% discharge depth (state of discharging 50% of full capacity) in the measurement and evaluation of the discharge property to be 28.3 Ω.

Further, as the effect of suppressing dendrite precipitation is evaluated in the same manner as in Example 1, the precipitation of lithium is not observed on the inner surfaces of the positive electrode and the negative electrode without change.

(Example 3)

The preparation of a non-aqueous electrolyte, preparation of a polymer electrolyte and preparation of a polymer cell are conducted in the same manner as in Example 1 except that a phosphazene derivative C (cyclic nPO/F type phosphazene derivative (ratio (nPO/F) of n-propoxy group (nPO) to fluorine (F) in all $R^4$s at n=3 in the formula (2) = 1/5), viscosity: 1.1 mPa·s (1.1 cP)) is added instead of the phosphazene derivative A, and then the self-extinguishing property, fire retardant property and non-combustibility, initial cell characteristics (voltage, internal resistance), discharge-recharge cycling property, low-temperature discharge property and high-temperature storing property are measured and evaluated, respectively. The results are shown in Table 1. Moreover, the internal resistance value (25°C, 1 kHz impedance) is measured and evaluated at a 50% discharge depth (state of discharging 50% of full capacity) in the measurement and evaluation of the discharge property to be 23.4 Ω.

Further, as the effect of suppressing dendrite precipitation is evaluated in the same manner as in Example 1, the precipitation of lithium is not observed on the inner surfaces of the positive electrode and the negative electrode without change.

(Example 4)

The preparation of a non-aqueous electrolyte, preparation of a polymer electrolyte and preparation of a polymer cell are conducted in the same manner as in Example 1 except that a phosphazene derivative D (chain EO type phosphazene derivative (compound of the general formula (1) in which X is a structure of organic group (A) in the general formula (3), and all of $Y^1$ to $Y^3$ and $Y^5$ to $Y^6$ are single bond, and all of $R^1$ to $R^3$ and $R^5$ to $R^6$ are ethoxy group,

and Z is oxygen), viscosity: 4.9 mPa·s (4.9 cP)) is added instead of the phosphazene derivative A, and then the self-extinguishing property, fire retardant property and non-combustibility, initial cell characteristics (voltage, internal resistance), discharge-recharge cycling property, low-temperature discharge property and high-temperature storing property are measured and evaluated, respectively. The results are shown in Table 1. Moreover, the internal resistance value (25°C, 1 kHz impedance) is measured and evaluated at a 50% discharge depth (state of discharging 50% of full capacity) in the measurement and evaluation of the discharge property to be 35.1 Ω.

Further, as the effect of suppressing dendrite precipitation is evaluated in the same manner as in Example 1, the precipitation of lithium is not observed on the inner surfaces of the positive electrode and the negative electrode without change.

(Example 5)

The preparation of a non-aqueous electrolyte, preparation of a polymer electrolyte and preparation of a polymer cell are conducted in the same manner as in Example 1 except that a phosphazene derivative E (cyclic AO/F type phosphazene derivative (ratio (AO/F) of allyloxy group ($-O-CH_2-CH=CH_2$) (AO) to fluorine (F) in all $R^4$s at n=3 in the formula (2) = 1/5), viscosity: 1.2 mPa·s (1.2 cP)) is added instead of the phosphazene derivative A, and then the self-extinguishing property, fire retardant property and non-combustibility, initial cell characteristics (voltage, internal resistance), discharge-recharge cycling property, low-temperature discharge property and high-temperature storing property are measured and evaluated, respectively. The results are shown in Table 1. Moreover, the internal resistance value (25°C, 1 kHz impedance) is measured and evaluated at a 50% discharge depth (state of discharging 50% of full capacity) in the measurement and evaluation of the discharge property to be 26.7 Ω.

Further, as the effect of suppressing dendrite precipitation is evaluated in the same manner as in Example 1, the precipitation of lithium is not observed on the inner surfaces of the positive electrode and the negative electrode without change.

Table 1

| Example | Evaluation of self-extinguishing property, fire retardant property and non-combustibility | Initial voltage (V) | Initial internal resistance (Ω) | Evaluation of discharge-recharge cycling property (after 50 cycles) | Low-temperature discharge property (capacity reducing ratio %) | High-temperature storing property | | |
|---|---|---|---|---|---|---|---|---|
| | | | | | | Discharge capacity (mAh/g) | Average discharge voltage (V) | Discharge capacity ratio (%) |
| Comparative Example 1 | combustion property | 2.7 | 0.12 | 5 | 83 | 126 | 4.10 | 90 |
| Example 1 | non-combustibility | 2.7 | 0.11 | 4 | 39 | 140 | 4.15 | 100 |
| Example 2 | non-combustibility | 2.85 | 0.09 | 4 | 32 | 144 | 4.15 | 100 |
| Example 3 | non-combustibility | 2.85 | 0.10 | 4 | 34 | 143 | 4.15 | 99 |
| Example 4 | self-extinguishing property | 2.76 | 0.11 | 5 | 40 | 141 | 4.13 | 98 |
| Example 5 | fire retardant property | 2.84 | 0.09 | 4 | 33 | 144 | 4.15 | 100 |

INDUSTRIAL APPLICABILITY

According to the invention, there can be provided a polymer cell having excellent self-extinguishing property or fire retardant property, stability, low-temperature discharge property and high-temperature storing property while maintaining cell characteristics required as a cell, being free from the leakage of electrolyte, enabling the miniaturization and thinning and facilitating the incorporation into various equipments as well as a polymer electrolyte preferably used in the polymer cell.

## Claims

1. A polymer cell comprising a positive electrode, a negative electrode, and a polymer electrolyte containing a polymer, a support salt and a phosphazene derivative.

2. A polymer cell according to claim 1, wherein the phosphazene derivative is represented by any one of the following general formulae (1) and (2):

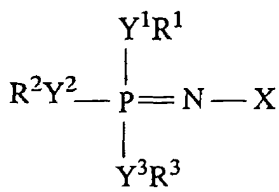

····· Formula (1)

(wherein each of $R^1$, $R^2$ and $R^3$ is a monovalent substituent or a halogen atom, X is a group containing at least one element selected from the group consisting of carbon, silicon, germanium, tin, nitrogen, phosphorus, arsenic, antimony, bismuth, oxygen, sulfur, selenium, tellurium and polonium, and each of $Y^1$, $Y^2$ and $Y^3$ is a bivalent connecting group, a bivalent element or a single bond);

$$(PNR^4{}_2)_n \quad \text{Formula (2)}$$

(wherein $R^4$ is a monovalent substituent or a halogen atom and n is 3-14).

3. A polymer cell according to claim 1 or 2, wherein the phosphazene derivative has a group containing a multiple bond other than phosphorus atom-nitrogen atom multiple bond in its molecular structure.

4. A polymer cell according to claim 3, wherein the multiple bond other than phosphorus atom-nitrogen atom multiple bond is carbon atom-carbon atom multiple bond.

5. A polymer cell according to claim 3 or 4, wherein the multiple bond other than phosphorus atom-nitrogen atom multiple bond is a double bond.

6. A polymer cell according to claim 3, wherein the multiple bond other than phosphorus atom-nitrogen atom multiple bond is an allyl group or a vinyl group.

7. A polymer cell according to claim 1, wherein the negative electrode has a surface roughness (Ra) of not more than 0.6 mm.

8. A polymer cell according to claim 1, wherein the polymer is at least one of polyethylene oxide, polyacrylate and polypropylene oxide.

9. A polymer cell according to claim 1 or 8, wherein the polymer has a weight-average molecular weight of not less than 100,000.

**10.** A polymer cell according to claim 9, wherein the weight-average molecular weight of the polymer is not less than 5,000,000.

**11.** A polymer cell according to claim 1, wherein an amount of the polymer to a total amount of the polymer and the support salt in the polymer electrolyte is 80-95% by mass.

**12.** A polymer cell according to claim 1, wherein a content of the phosphazene derivative in the polymer electrolyte is at least 0.5% by mass.

**13.** A polymer cell according to claim 12, wherein a content of the phosphazene derivative in the polymer electrolyte is at least 2% by mass.

**14.** A polymer cell according to claim 13, wherein a content of the phosphazene derivative in the polymer electrolyte is at least 2.5% by mass.

**15.** A polymer cell according to claim 14, wherein a content of the phosphazene derivative in the polymer electrolyte is at least 3% by mass.

**16.** A polymer electrolyte **characterized by** containing a polymer, a support salt and a phosphazene derivative and using in a polymer cell.

## INTERNATIONAL SEARCH REPORT

International application No. PCT/JP02/06570

**A. CLASSIFICATION OF SUBJECT MATTER**

Int.Cl⁷ H01M10/40

According to International Patent Classification (IPC) or to both national classification and IPC

**B. FIELDS SEARCHED**

Minimum documentation searched (classification system followed by classification symbols)

Int.Cl⁷ H01M10/40, H01M6/18, C07F9/6581

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| P,X<br>P,Y | JP 2002-075444 A (Sony Corp.), 15 March, 2002 (15.03.02), Claims 1 to 6, 10; Par. Nos. [0044], [0045]; example 21 (Family: none) | 1,2,7-16<br>3-6 |
| X<br>Y | JP 2001-023687 A (Sony Corp.), 26 January, 2001 (26.01.01), Claims 1 to 5, 14; Par. Nos. [0054], [0055]; example 28 | 1,2,7-16<br>3-6 |
| X<br>Y | JP 5-307975 A (Tomoegawa Paper Co., Ltd.), 19 November, 1993 (19.11.93), Claim 4; Par. No. [0011] (Family: none) | 1,2,7-16<br>3-6 |

[X] Further documents are listed in the continuation of Box C. [ ] See patent family annex.

* Special categories of cited documents:
- "A" document defining the general state of the art which is not considered to be of particular relevance
- "E" earlier document but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| | |
|---|---|
| Date of the actual completion of the international search<br>15 October, 2002 (15.10.02) | Date of mailing of the international search report<br>29 October, 2002 (29.10.02) |
| Name and mailing address of the ISA/<br>Japanese Patent Office | Authorized officer |
| Facsimile No. | Telephone No. |

Form PCT/ISA/210 (second sheet) (July 1998)

INTERNATIONAL SEARCH REPORT

International application No.
PCT/JP02/06570

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 4-167373 A (Shin-Kobe Electric Machinery Co., Ltd., Otsuka Chemical Co., Ltd.),<br>15 June, 1992 (15.06.92),<br>Claims 2, 3<br>(Family: none) | 1,2,7-16<br>3-6 |
| X<br>Y | JP 63-241066 A (Teijin Ltd.),<br>06 October, 1988 (06.10.88),<br>Claims 1, 2; page 4, upper left column<br>(Family: none) | 1,2,7-16<br>3-6 |
| X<br>Y | WO 88/05064 A1 (Otsuka Chemical Co., Ltd.),<br>14 July, 1988 (14.07.88),<br>Claims 1 to 5<br>& EP 294495 A1 & US 4840856 A | 1,2,7-16<br>3-6 |
| X<br>Y | JP 61-254626 A (Research Corp.),<br>12 November, 1986 (12.11.86),<br>Claims 1 to 34<br>(Family: none) | 1,2,7-6<br>3-6 |
| A | JP 7-335247 A (Daimler-Benz A.G.),<br>22 December, 1995 (22.12.95),<br>& EP 687026 A2 & US 5567546 A | 1-16 |

Form PCT/ISA/210 (continuation of second sheet) (July 1998)